# FASCICULE DE BREVET EUROPEEN

(11) **EP 0 724 123 B1**
(45) Date de publication et mention de la délivrance du brevet: **24.11.1999**
(21) Numéro de dépôt: 96101108.7
(22) Date de dépôt: 26.01.1996
(51) Int. Cl.: F28D 1/02

(54) **Dispositif d'alimentation électrique d'un motoventilateur fixé sur un échangeur de chaleur**
Vorrichtung zur Stromversorgung eines auf einem Wärmetauscher befestigten Ventilators
Device for the electric power supply of an engine fan fixed on a heat exchanger

(30) Priorité: 30.01.1995 FR 9501043
(43) Date de publication de la demande: 31.07.1996
(73) Titulaire: VALEO THERMIQUE MOTEUR, 78320 Le Mesnil Saint-Denis (FR)
(72) Inventeur: Potier, Michel, F-78120 Rambouillet (FR); Santander, Eduardo, F-94400 Vity-sur-Seine (FR)
(74) Mandataire: Gamonal, Didier

(56) Documents cités:
- EP-A- 0 183 596
- EP-A- 0 316 137
- FR-A- 2 118 606

## Description

L'invention concerne un ensemble comprenant un échangeur de chaleur muni d'un bloc rigide présentant des première et seconde faces principales, formé d'au moins une rangée de tubes parallèles entre eux et d'ailettes, et un motoventilateur fixé sur l'échangeur de chaleur, en regard de ladite première face du bloc, et propre à produire un courant d'air en contact thermique avec celui-ci, le motoventilateur comportant un moteur électrique d'entraînement d'un accessoire tel qu'une hélice, ladite hélice étant située en regard de la première face du bloc.

De tels ensembles sont connus notamment pour le refroidissement des moteurs thermiques de véhicules et en particulier par le document EP-A-0183596.

Le moteur électrique du motoventilateur est habituellement alimenté par l'intermédiaire d'un câble qui s'étend le long de la première face principale du bloc, entre celui-ci et le motoventilateur. Le motoventilateur étant avantageusement disposé très près du bloc de façon à réduire l'encombrement de l'ensemble et à éviter des pertes de débit d'air entre ces deux composants, le câble risque d'être endommagé par la partie tournante du motoventilateur ou par les tranches des ailettes.

Le but de l'invention est de remédier à cet inconvénient, et de proposer une nouvelle voie pour amener le courant d'alimentation au moteur électrique.

L'invention vise notamment un ensemble du genre défini en introduction, et prévoit qu'il comprend en outre des moyens de traversée pour faire passer un courant électrique d'alimentation dudit moteur électrique au travers dudit bloc, de l'une à l'autre desdites faces principales.

Des caractéristiques optionnelles de l'ensemble selon l'invention, complémentaires ou alternatives, sont énoncées ci-après :
- Ledit moteur électrique présente un flasque tourné vers ladite première face du bloc autour duquel ledit courant d'air est réparti selon une configuration annulaire, et que lesdits moyens de traversée sont disposés en regard dudit flasque.
- Lesdits moyens de traversée comprennent des conducteurs électriques logés au moins en partie dans au moins une pièce isolante disposée au sein du bloc et qui s'étend sensiblement de l'une à l'autre desdites faces principales.
- Ladite pièce isolante est une pièce intercalaire interposée entre deux jeux d'ailettes dudit bloc, et également traversée avec serrage par une partie au moins des tubes, qui sert en outre à la fixation du flasque sur l'échangeur de chaleur.
- Ladite pièce isolante est logée dans un évidement du bloc qui passe entre deux tubes voisins de chaque rangée et qui est formé par des découpes ménagées dans plusieurs ailettes voisines sur toute l'épaisseur du bloc.
- Ladite pièce isolante est un appendice du flasque.
- Lesdits conducteurs comprennent au moins deux conducteurs écartés radialement l'un de l'autre, traversant la pièce isolante et propres à établir un contact électrique avec des conducteurs introduits par l'une et/ou l'autre desdites faces principales.
- Lesdits conducteurs sont sous forme d'un câble souple traversant un alésage prévu dans la pièce isolante.
- Lesdits conducteurs sont au moins partiellement noyés dans la pièce isolante, notamment par surmoulage.
- Il comprend en outre un boîtier de connexion et/ou de commande enfichable propre à être appliqué de façon amovible sur la seconde face du bloc et présentant des bornes qui viennent en contact avec lesdits conducteurs, ainsi le cas échéant que des moyens de fixation mécanique du connecteur sur la pièce isolante.
- Le boîtier de commande porte au moins un capteur de température qui vient en contact thermique avec un tube du bloc et qui fait partie d'un circuit de commande de l'alimentation du motoventilateur.

Les caractéristiques et avantages de l'invention seront exposés plus en détail dans la description ci-après, en se référant aux dessins annexés, où des éléments identiques ou analogues sont désignés dans toutes les figures par les mêmes numéros de référence. Sur ces dessins :
- la figure 1 est une vue partielle, en coupe partielle par un plan perpendiculaire à la direction longitudinale des tubes, d'un ensemble selon l'invention ;
- la figure 2 est une vue partielle en coupe, analogue à la figure 1, montrant seulement le bloc et les moyens de traversée, d'un autre mode de réalisation d'un ensemble selon l'invention ;
- la figure 3 est une vue partielle de face de l'échangeur de chaleur de la figure 2 montrant les moyens de traversée ; et
- les figures 4 et 5 sont des vues analogues à la figure 1, relatives à d'autres modes de réalisation d'un ensemble selon l'invention.

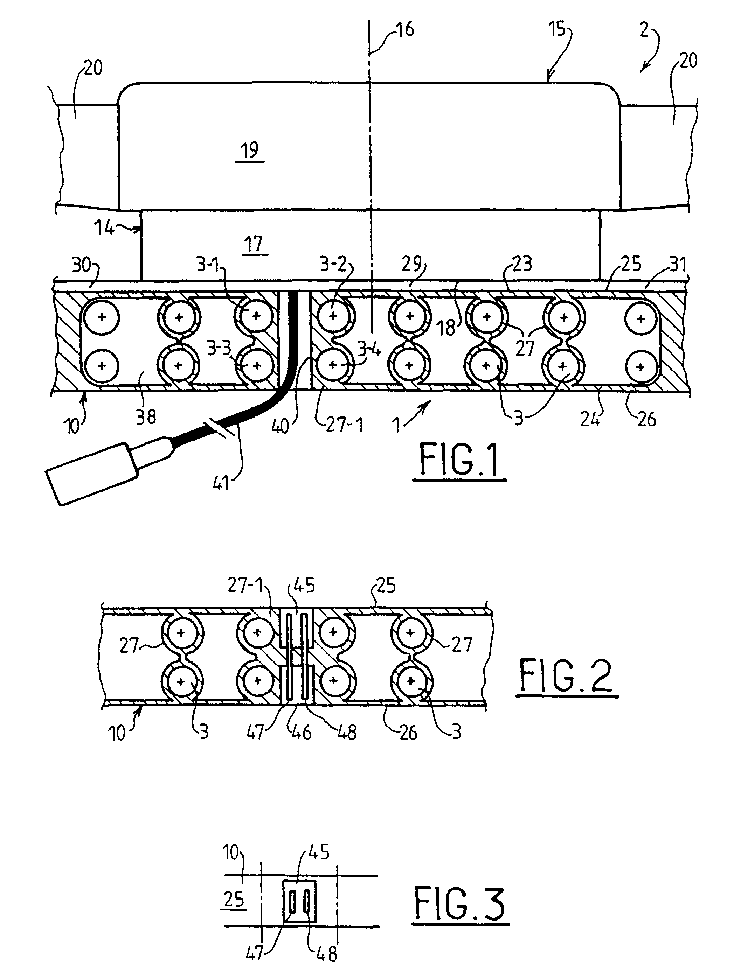

L'ensemble illustré à la figure 1 comprend un radiateur 1 destiné au refroidissement du moteur thermique d'un véhicule automobile, et un motoventilateur 2 destiné à produire un courant d'air au travers du radiateur. Ce dernier comprend une série de tubes parallèles 3, formant dans l'exemple représenté deux rangées juxtaposées, les deux extrémités de chaque tube débouchant respectivement dans deux boîtes à fluide non représentées disposées respectivement en avant et en arrière du plan de la figure. De façon classique, les tubes traversent des ailettes métalliques rectangulaires s'étendant dans des plans perpendiculaires à la direction longitudinale des tubes. Ceux-ci s'engagent avec serrage dans des orifices des ailettes de façon à réaliser un bon contact thermique entre les tubes et les ailettes. Les tubes et les ailettes forment ainsi un bloc parallélépipédique rigide interposé entre les deux boîtes à fluide.

Les ailettes du bloc sont partagées en deux jeux, également situés respectivement en avant et en arrière du plan de la figure, par une pièce intercalaire 10 en matière plastique moulée disposée de préférence à mi-longueur du bloc et présentant, dans un plan perpendiculaire à la direction longitudinale des tubes, un profil rectangulaire semblable à celui des ailettes. Ce contour ne fait pas saillie par rapport à celui des ailettes, ce qui permet de mettre la pièce en place pratiquement sans modification de la chaîne d'assemblage du bloc.

Le motoventilateur 2 comprend une partie fixe constituant un moteur électrique 14 et une partie rotative constituant une hélice 15, qui peut tourner par rapport à la partie fixe et au radiateur autour d'un axe 16 perpendiculaire aux faces principales 25, 26 du bloc parallélépipédique et passant sensiblement par le centre de celles-ci. Le moteur 14 présente un corps 17 de forme sensiblement cylindrique de révolution, fermé du côté du bloc 7 par un flasque sensiblement circulaire 18. L'hélice 15 comprend un moyeu 19 coiffant le corps 17, ouvert vers le bloc et fermé à l'opposé. A partir du moyeu 19 s'érigent des pales radiales 20, dont les extrémités radialement extérieures sont reliées entre elles par une virole 21, de révolution autour de l'axe 16, délimitant un passage annulaire 22 pour le courant d'air produit par les pales 20.

La pièce 10 présente un profil en I en section, et comporte deux lames minces de matière 23 et 24 contribuant à définir les faces principales 25 et 26 du bloc tournées respectivement vers le motoventilateur et à l'opposé de celui-ci, les lames 23 et 24 étant reliées entre elles par une âme 38. Dans l'exemple illustré, les tubes 3 qui passent en regard du moteur 14, qui sont donc les plus proches de l'axe 16, sont entourés, dans la traversée de la pièce 10, par des bossages 27 formés sur l'âme 38 et dont chacun entoure étroitement le tube qui lui est associé afin que la pièce 10 soit immobilisée fermement par rapport aux tubes et constitue avec ceux-ci et les deux jeux d'ailettes 8 et 9 un bloc rigide.

Le flasque 18 se prolonge, au-delà du diamètre du corps 17 du moteur, par des pattes radiales 30 et 31 et présente, au moins au niveau de ces pattes, une saillie 29 tournée vers le bloc. Les pattes 30 et 31 sont appliquées au moyen de vis non représentées sur la lame 23 de façon à assurer la fixation du corps 17, et par conséquent du motoventilateur 2, sur le bloc.

La plupart des bossages 27 de la pièce 10 sont traversés chacun par deux tubes 3 appartenant respectivement aux deux rangées. L'un 27-1 de ces bossages est traversé par quatre tubes, à savoir deux tubes 3-1 et 3-2 appartenant à la rangée proche de la face 25 du bloc, et deux tubes 3-3 et 3-4 appartenant à l'autre rangée et disposés respectivement en regard des précédents. Un alésage 40 est ménagé dans le bossage 27-1, entre les tubes 3-1 et 3-3 d'une part et les tubes 3-2 et 3-4 d'autre part, cet alésage débouchant dans les faces 25 et 26 et étant orienté perpendiculairement à celles-ci. Il permet le passage, au travers du bloc, d'un câble d'alimentation électrique 41 qui sort du flasque 18 à travers la saillie 29.

La figure 2 montre une pièce 10 analogue à celle de la figure 1, dans laquelle l'alésage 40 est remplacé par deux trous borgnes 45 et 46 ménagés l'un en regard de l'autre à partir des faces 25 et 26 respectivement. Deux languettes de contact métalliques 47 et 48, s'étendant sensiblement dans des plans perpendiculaires à ces mêmes faces, ont chacune leur région médiane noyée dans le bossage 27-1, entre les trous 45 et 46, et leurs deux régions d'extrémités situées respectivement dans ces deux trous. Les régions d'extrémités des languettes 47 et 48 situées dans le trou 45 peuvent coopérer par exemple avec des fiches femelles respectives non représentées solidaires de la coupelle 17 du motoventilateur et faisant saillie par rapport à la saillie 29. De même, les régions d'extrémités situées dans le trou 46 constituent des fiches mâles qui peuvent coopérer avec d'autres fiches femelles pour relier électriquement le moteur à un circuit d'alimentation.

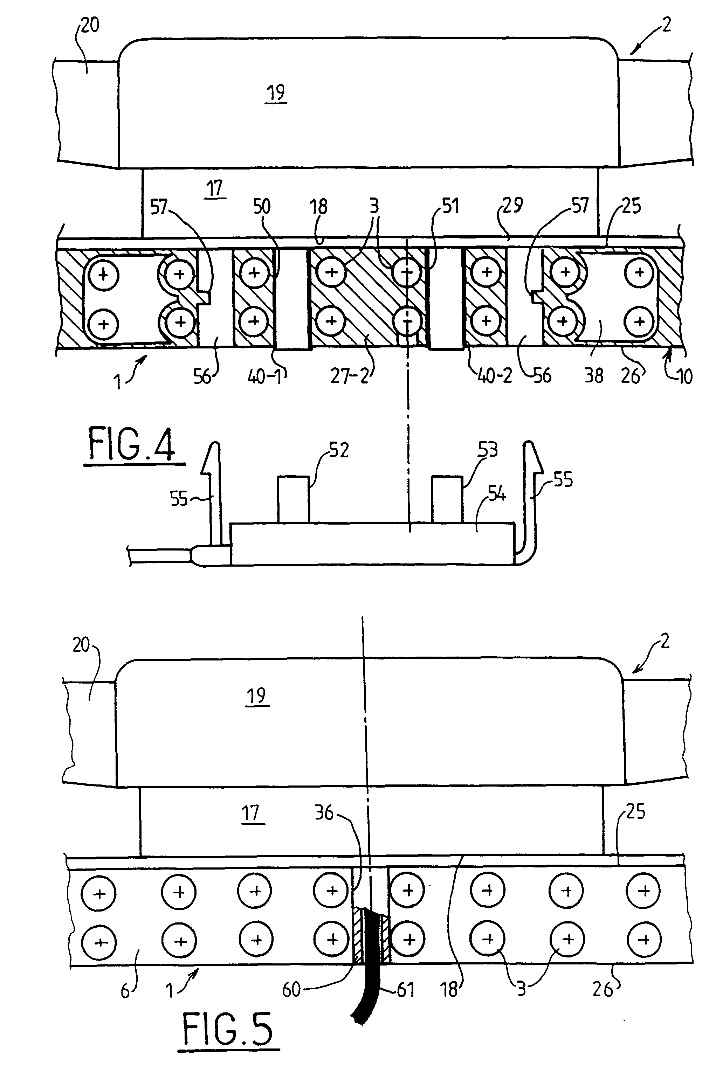

La figure 4 montre une pièce 10 modifiée dans laquelle un bossage 27-2 est traversée par douze tubes 3, à savoir six tubes de chacune des deux rangées, deux alésages 40-1 et 40-2, semblables à l'alésage 40 de la figure 1, étant ménagés dans le bossage 27-2 et encadrés par des groupes respectifs de quatre tubes constituant les huit tubes médians parmi les douze précités. Ces alésages reçoivent respectivement deux bornes d'alimentation électrique 50 et 51 du moteur du motoventilateur 2, qui sont de forme tubulaire et font saillie par rapport à la saillie 29. Les bornes 50 et 51 peuvent recevoir à leur tour des bornes 52 et 53, sous forme de fiches mâles, d'un boîtier de connexion et de commande 54, pour établir des contacts électriques, lorsque ce boîtier est appliqué sur la face 26 du bloc, dans une position de connexion. Il peut être maintenu dans cette position par deux pattes élastiques 55 appartenant au boîtier 54, qui pénètrent dans des évidements 56 traversant le bossage 27-2, de part et d'autre des huit tubes 3 médians mentionnées plus haut, en s'accrochant sur des saillie 57 présentées par ce bossage. Bien entendu, le boîtier 54 pourrait être fixé par d'autres moyens, par exemple par une vis le traversant et se vissant dans le bossage 27-2.

La figure 5 est relative à un ensemble dont l'échangeur de chaleur ne comporte pas de pièce intercalaire, le flasque 18 du motoventilateur pouvant par exemple être fixé directement sur les ailettes 6 du bloc. Une fraction de la longueur de quelques-unes de ces ailettes est enlevée, entre deux tubes voisins de chaque rangée, pour former un évidement traversant le bloc de sa face 25 à sa face 26, cet évidement permettant le passage d'un appendice tubulaire 60 faisant saillie par rapport au flasque 18. L'appendice 60 sert de guide au câble d'alimentation 61 du motoventilateur, au travers du bloc, et évite que ce câble soit endommagé par les tranches des ailettes 6. Les ailettes peuvent être découpées sans difficulté, par exemple par poinçonnage, pour réaliser un évidement 36 ayant avantageusement un profil carré dont le côté correspond au diamètre de l'appendice 60.

## Revendications

1. Ensemble comprenant un échangeur de chaleur (1) muni d'un bloc rigide présentant des première et seconde faces principales (25, 26), formé d'au moins une rangée de tubes (3) parallèles entre eux et d'ailettes (6), et un motoventilateur (2) fixé sur l'échangeur de chaleur, en regard de ladite première face (25) du bloc, et propre à produire un courant d'air en contact thermique avec celui-ci, notamment pour le refroidissement d'un moteur thermique de véhicule, le motoventilateur comportant un moteur électrique d'entraînement situé en regard de la première face du bloc, caractérisé en ce qu'il comprend en outre des moyens de traversée (10, 40, 41) pour faire passer un courant électrique d'alimentation dudit moteur électrique au travers dudit bloc, de l'une à l'autre desdites faces principales.

2. Ensemble selon la revendication 1, caractérisé en ce que ledit moteur électrique (14) présente un flasque (18) tourné vers ladite première face (25) du bloc autour duquel ledit courant d'air est réparti selon une configuration annulaire (22), et que lesdits moyens de traversée sont disposés en regard dudit flasque.

3. Ensemble selon l'une des revendications 1 et 2, caractérisé en ce que lesdits moyens de traversée comprennent des conducteurs électriques (47, 48) logés au moins en partie dans au moins une pièce isolante (10) disposée au sein du bloc et qui s'étend sensiblement de l'une à l'autre desdites faces principales.

4. Ensemble selon la revendication 3, rattachée à la revendication 2, caractérisé en ce que ladite pièce isolante est une pièce intercalaire (10) interposée entre deux jeux d'ailettes dudit bloc, et également traversée avec serrage par une partie au moins des tubes, qui sert en outre à la fixation du flasque sur l'échangeur de chaleur.

5. Ensemble selon la revendication 3, caractérisé en ce que ladite pièce isolante (60) est logée dans un évidement (36) du bloc qui passe entre deux tubes (3) voisins de chaque rangée et qui est formé par des découpes ménagées dans plusieurs ailettes (6) voisines sur toute l'épaisseur du bloc.

6. Ensemble selon la revendication 5, caractérisé en ce que ladite pièce isolante est un appendice du flasque.

7. Ensemble selon l'une des revendications 3-6, caractérisé en ce que lesdits conducteurs comprennent au moins deux conducteurs (50, 51) écartés radialement l'un de l'autre, traversant la pièce isolante (10) et propres à établir un contact électrique avec des conducteurs (52, 53) introduits par l'une et/ou l'autre (26) desdites faces principales.

8. Ensemble selon l'une des revendications 3 à 6, caractérisé en ce que lesdits conducteurs sont sous forme d'un câble souple (41) traversant un alésage (40) prévu dans la pièce isolante (10).

9. Ensemble selon l'une des revendications 3 à 6, caractérisé en ce que lesdits conducteurs (47, 48) sont au moins partiellement noyés dans la pièce isolante, notamment par surmoulage.

10. Ensemble selon l'une des revendications 3 à 9, caractérisé en ce qu'il comprend en outre un boîtier de connexion et/ou de commande enfichable (54) propre à être appliqué de façon amovible sur la seconde face (26) du bloc et présentant des bornes (52, 53) qui viennent en contact avec lesdits conducteurs (50, 51), ainsi le cas échéant que des moyens (55) de fixation mécanique du connecteur sur la pièce isolante.

## Patentansprüche

1. Baugruppe, umfassend einen Wärmetauscher (1), der mit einem starren Block versehen ist, der erste und zweite Hauptflächen (25, 26) aufweist und der aus wenigstens einer Reihe von zueinander parallelen Rohren (3) und Rippen (6) besteht, und ein Lüfteraggregat (2), das am Wärmetauscher gegenüber der besagten ersten Fläche (25) des Blocks befestigt ist und einen Luftstrom in thermischem Kontakt mit diesem erzeugen kann, insbesondere zur Kühlung eines Verbrennungsmotors eines Fahrzeugs, wobei das Lüfteraggregat einen elektrischen Antriebsmotor umfaßt, der sich gegenüber der ersten Fläche des Blocks befindet, **dadurch gekennzeichnet,** daß sie außerdem Durchgangsmittel (10, 40, 41) umfaßt, um einen elektrischen Strom zur Speisung des besagten Elektromotors durch den besagten Block, von einer zur anderen der besagten Hauptflächen, hindurchzuführen.

2. Baugruppe nach Anspruch 1, **dadurch gekennzeichnet**, daß der besagte Elektromotor (14) einen zu der besagten ersten Fläche (25) des Blocks gerichteten Lagerschild (18) aufweist, um den herum der besagte Luftstrom entsprechend einer ringförmigen Konfiguration (22) verteilt wird, wobei die besagten Durchgangsmittel gegenüber dem besagten Lagerschild angeordnet sind.

3. Baugruppe nach einem der Ansprüche 1 und 2, **dadurch gekennzeichnet,** daß die besagten Durchgangsmittel elektriscne Leiter (47, 48) umfassen, die wenigstens teilweise in wenigstens einem Isolierteil (10) aufgenommen sind, das im Innern des Blocks angeordnet ist und das sich in etwa von einer zur anderen der besagten Hauptflächen erstreckt.

4. Baugruppe nach Anspruch 3 in Verbindung mit Anspruch 2, **dadurch gekennzeichnet**, daß das besagte Isolierteil ein Zwischenteil (10) ist, das zwischen zwei Rippensätzen des besagten Blocks eingefügt ist und durch das außerdem unter Einspannung wenigstens ein Teil der Rohre hindurchgeht, der außerdem zur Befestigung des Lagerschilds am Wärmetauscher dient.

5. Baugruppe nach Anspruch 3, **dadurch gekennzeichnet**, daß das besagte Isolierteil (60) in einer Aussparung (36) des Blocks aufgenommen ist, die zwischen zwei benachbarten Rohren (3) jeder Reihe verläuft und die durch Einschnitte gebildet wird, die in mehreren benachbarten Rippen (6) auf der gesamten Dicke des Blocks eingearbeitet sind.

6. Baugruppe nach Anspruch 5, **dadurch gekennzeichnet**, daß das besagte Isolierteil ein Fortsatz des Lagerschilds ist.

7. Baugruppe nach einem der Ansprüche 3 bis 6, **dadurch gekennzeichnet**, daß die besagten Leiter wenigstens zwei zueinander beabstandete Leiter (50, 51) umfassen, die durch das Isolierteil (10) hindurchgehen und einen elektrischen Kontakt mit durch die eine und/oder die andere (26) der besagten Hauptflächen eingeführten Leitern (52, 53) herstellen können.

8. Baugruppe nach einem der Ansprüche 3 bis 6, **dadurch gekennzeichnet**, daß die besagten Leiter in Form eines biegsamen Kabels (41) ausgeführt sind, das durch eine im Isolierteil (10) vorgesehene Bohrung (40) hindurchgeht.

9. Baugruppe nach einem der Ansprüche 3 bis 6, **dadurch gekennzeichnet,** daß die besagten Leiter (47, 48), insbesondere durch Aufformen, wenigstens teilweise in das Isolierteil eingelassen sind.

10. Baugruppe nach einem der Ansprüche 3 bis 9, **dadurch gekennzeichnet,** daß sie außerdem ein einsteckbares Anschluß- und/oder Steuergehäuse (54) umfaßt, das abnehmbar an der zweiten Fläche (26) des Blocks angebracht werden kann und Klemmen (52, 53), die mit den besagten Leitern (50, 51) in Kontakt kommen, sowie gegebenenfalls Mittel (55) zur mechanischen Befestigung des Verbinders am Isolierteil aufweist.

## Claims

1. An assembly comprising a heat exchanger (1) which includes a rigid block having first and second main faces (25, 26), and comprising at least one row of tubes (3) parallel to each other, together with fins (6), and a motorised fan unit (2) fixed on the heat exchanger in facing relationship with the said first face (25) of the block and adapted to produce a stream of air in thermal contact with the latter, in particular for cooling a heat engine of a vehicle, the motorised fan unit comprising an electric drive motor situated facing the first face of the block, characterised in that it further includes traverse means (10, 40, 41) for passing an electric supply current for the electric motor through the said block, from one of the said main faces to the other.

2. An assembly according to Claim 1, characterised in that the said electric motor (14) has a transverse plate (18) which faces towards the said first face (25) of the block, around which the said stream of air is distributed in an annular configuration (22), and in that the said traverse means are disposed in facing relationship with the said transverse plate.

3. An assembly according to Claim 1 or Claim 2, characterised in that the said traverse means comprise electrical conductors (47, 48) which are lodged at least partly in at least one insulating member (10) disposed inside the block and extending substantially from one of the said main faces to the other.

4. An assembly according to Claim 3 when dependent on Claim 2, characterised in that the said insulating member is an insert member (10) interposed between two sets of fins of the said block and also having at least part of the tubes passing through it and gripped by it, and further serving for fastening the transverse plate on the heat exchanger.

5. An assembly according to Claim 3, characterised in that the said insulating member (60) is lodged in a housing (36) of the block which passes between two neighbouring tubes (3) of each row, and which is constituted by cut-outs formed in a plurality of adjacent fins (6) over the whole thickness of the block.

6. An assembly according to Claim 5, characterised in that the said insulating member is an appendix of the transverse plate.

7. An assembly according to one of Claims 3 to 6, characterised in that the said conductors comprise at least two conductors (50, 51) which are spaced radially away from each other and pass through the insulating member (10), being adapted to establish electrical contact with conductors (52, 53) introduced through one or other (26), or both, of the said main faces.

8. An assembly according to one of Claims 3 to 6, characterised in that the said conductors are in the form of a flexible cable (41) extending through a bore (40) formed in the insulating member (10).

9. An assembly according to one of Claims 3 to 6, characterised in that the said conductors (47, 48) are at least partially embedded in the insulating member, in particular by superimposed moulding.

10. An assembly according to one of Claims 3 to 9, characterised in that it further includes a connection and/or adjustable control unit (54) which is arranged to be applied removably on the second face (26) of the block and which has terminals (52, 53) that come into contact with the said conductors (50, 51), and also, where appropriate, with fastening means (55) for fastening the connector mechanically on the insulating member.
